# EUROPEAN PATENT SPECIFICATION

(11) **EP 0 451 681 B1**
(45) Date of publication and mention of the grant of the patent: **05.11.1997**
(21) Application number: 91105263.7
(22) Date of filing: 03.04.1991
(51) Int. Cl.: G02F 1/135, G02F 1/1347, G02B 5/32, G03H 1/08, G02F 1/29

(54) **Optical apparatus**
Optische Vorrichtung
Dispositif optique

(30) Priority: 05.04.1990 JP 90729/90; 27.08.1990 JP 224826/90; 21.09.1990 JP 252266/90; 23.10.1990 JP 285242/90; 29.10.1990 JP 291247/90; 14.11.1990 JP 307836/90; 16.11.1990 JP 310466/90; 25.01.1991 JP 7612/91; 22.02.1991 JP 28432/91; 22.02.1991 JP 28435/91
(43) Date of publication of application: 16.10.1991
(73) Proprietor: SEIKO EPSON CORPORATION, Shinjuku-ku Tokyo-to (JP)
(72) Inventor: Amako, Jun, Suwa-shi, Nagano-ken (JP); Sonehara, Tomio, Suwa-shi, Nagano-ken (JP); Miura, Hirotsuna, Suwa-shi, Nagano-ken (JP); Watanabe, Yoshio, Suwa-shi, Nagano-ken (JP)
(74) Representative: Hoffmann, Eckart, Dipl.-Ing.

(56) References cited:
- EP-A- 0 125 692
- EP-A- 0 450 644
- WO-A-89/12249
- APPLIED OPTICS, vol. 28, no. 15, November 1989, NEW YORK, USA pages 4845 - 4852; TH.H. BARNES ET AL.: 'Phase-only modulation using a twisted nematic liquid crystal television'
- APPLIED OPTICS, vol. 25, no. 9, May 1986, NEW YORK USA pages 1380 - 1382; A.M. THAI: 'Low-cost LCD spatial light modulator with high optical quality'
- P. HARIHARAN 'Optical holography' 1984 , CAMBRIDGE UNIVERSITY PRESS , CAMBRIDGE
- APPLIED PHYSICS LETTERS, vol. 42, no. 9, May 1983, NEW YORK, USA pages 807 - 809; S. KOMURO ET AL.: 'Study of optically induced degradation of conductivity in hydrogenated amorphous silicon by transient grating method'
- JAPANESE JOURNAL OF APPLIED PHYSICS, vol. 29, no. 8, August 1990, TOKYO, JP pages 1533 - 1535; J. AMAKO, T. SOMEHARA: 'Computer-Generated Hologram Using TFT Active-Matrix Liquid Crystal Spatial Light Modulator (TFT-LCSLM)'
- JAPANESE JOURNAL OF APPLIED PHYSICS, vol. 29, no. 7, July 1990, TOKYO, JP pages
- 1231 - 1234; T. SONEHARA: 'Photo-Addressed Liquid Crystal SLM with Twisted Nematic ECB (TN-ECB) Mode'
- Optics Letters, Vol. 13, No.3, N. Konforti, E. Marom and S.T. Wu, pages 251-253. Optical Engineering, Vol. 26, No. 2, 1987, S.T. Wu, pages 120-128.

## Description

The present invention relates to an optical apparatus which uses a liquid crystal device.

Holography has commonly been used as means for controlling the wave front of coherent light. Various types of information apparatus which use a holographic device have been developed and part of them have been put into practical use such as a laser scanner or an optical disk head.

However, since the holographic device is manufactured using a recording material, such as a silver halide photo-sensitive emulsion or a resist, it must be reconstructed each time the requirements for the holographic device alter. The man-hours and equipment investment required for reconstruction are a great burden to the manufacturer.

The document APPLIED OPTICS, Vol. 25, No. 9, 1 May 1986, pp. 1380-1382 discloses a low-cost LCD spatial light modulator (SLM) based on a commercially available TN LCD TV. While this document refers to phase errors to be avoided, the document APPLIED OPTICS, Vol. 28, No. 22, 15 November 1989, pp. 4845-4849 discloses a phase-only modulation SLM which is also based on a commercially available TN LCD TV, and which is according to the preamble of claim 1. The LCD has an off-twist of 90° and is driven at a voltage low enough not to disrupt the spiral twist. Light has to pass the LCD twice in order to obtain a modulation phase depth of approximately This prior art is not able to provide a full 0-2π phase modulation as would be required for phase type hologram modulation.

The document OPTICS LETTERS, Vol. 13, No. 3, March 1988, p. 251-253, discusses phase-only modulation with twisted nematic liquid crystal spatial light modulators (LCSLM). From this document it is known that a parallel-aligned LCSLM provides more phase change than a twisted one of identical LC layer thickness.

In view of the aforementioned problem of the conventional techniques, it is an object of the present invention to provide an optical apparatus having a programmable function for controlling a light wave front which is achieved by the incorporation of a liquid crystal device exhibiting desired light wave modulation characteristics.

An optical apparatus according to the present invention is as claimed in claim 1. Use of an optical apparatus according to the present invention is as claimed in claim 9.

Embodiments of the present invention will now be described with reference to the accompanying drawings, in which
- Fig. 1: is a perspective view of an optical apparatus using a TN mode liquid crystal device;
- Fig. 2(a): is a plan view showing the external view of an electrically addressed transmission type liquid crystal device;
- Fig. 2(b): is a plan view showing the pixel arrangement of the electrically addressed transmission type liquid crystal device;
- Fig. 3: is a graph showing the phase modulation characteristics of a TN mode liquid crystal device;
- Fig. 4: is a graph showing the amplitude modulation characteristics of the TN mode liquid crystal device;
- Fig. 5: is a graph showing the phase modulation characteristics of an ECB mode liquid crystal device;
- Fig. 6: is a graph showing the amplitude modulation characteristics of the ECB mode liquid crystal device;
- Fig. 7: is a plan view of a first embodiment of the present invention;
- Fig. 8(a) and 8(b): respectively show amplitude distribution of a kinoform;
- Fig. 9: is a plan view of an second embodiment of the present invention;
- Figs. 10(a) and 10(b): are a plan view and a partially enlarged cross-sectional view, respectively, of a third embodiment of the present invention;
- Fig. 11: is a plan view of a fourth embodiment of the present invention;
- Fig. 12: is a plan view of a fifth embodiment of the present invention;
- Fig. 13(a): is a perspective view of a three-dimensional formed model;
- Fig. 13(b): is a cross-sectional view of a three-dimensional formed article; and
- Fig. 14: is a plan view of a sixth embodiment of the present invention.

### TN mode liquid crystal device

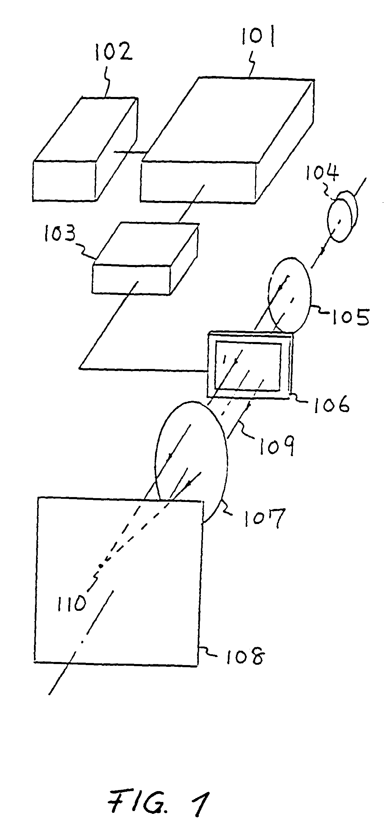

Fig. 1 shows the configuration of an optical apparatus. A laser beam 109 emanating from a laser beam source 104 is converted into parallel rays of light by means of a collimator lens 105. The resultant light illuminates a liquid crystal device 106 which modulates the wave front of the incident light by the action of a computer-generated hologram recorded on the liquid crystal device 106. The modulated light passes through a lens 107 and then forms a laser beam spot or a spot row 110 on a predetermined output screen 108.

A video signal for recording the computer-generated hologram on the liquid crystal device 106 is created by a personal computer (PC) 101. The signal is input to the liquid crystal device 106 through an interface circuit 103. The birefringence of each pixel of the liquid crystal device 106 changes in accordance with the level of the input signal, by which amplitude modulation of the wavefront of the laser beam is performed. The computer-generated hologram recorded on the liquid crystal device 106 can be rewritten at a high speed by reading out the pattern data stored in a video memory 102 of the PC 101 beforehand in sequence.

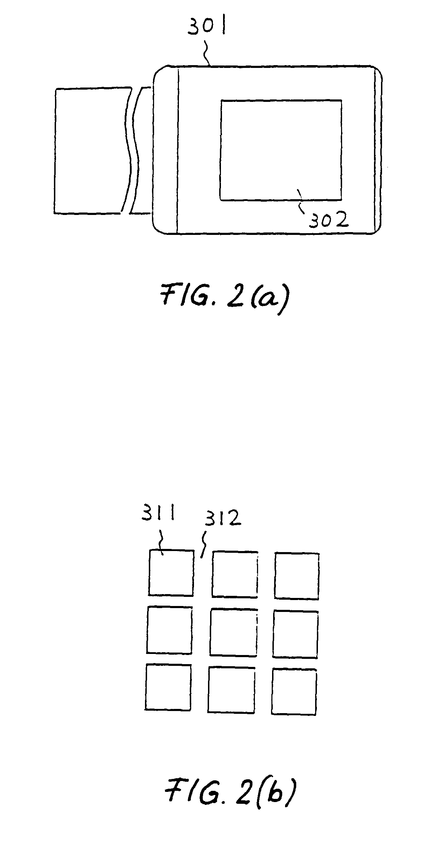

Fig. 2(a) shows the external view of an example of a liquid crystal device 301. This liquid crystal device has the following features:
(1) There is no crosstalk between the pixels because of the provision of a poly-Si TFT (a thin-film transistor) as an active element for each pixel.
(2) The size is small because of a built-in driver.
(3) The display area 302 having dimensions of 19 mm x 14 mm has 320 pixels in the horizontal direction and 220 pixels in the vertical direction.

Fig. 2(b) is an enlarged plan view of the display area of the liquid crystal device 301. The pixels 311 are arranged in the form of a regular lattice equally spaced from each other both horizontal and vertical direction.

The TFTs and other circuit elements are disposed below a light blocking mask 312 in order to avoid malfunction caused by the irradiation of light.

The use of the liquid crystal device having the aforementioned features enables the laser beam spot arrangement having a desired intensity distribution to be freely generated.

The computer-generated hologram comprises a Fourier transform type amplitude hologram which is characterized in that single Fourier data is expressed using nine pixels 311.

The liquid crystal device shown in Fig. 2 includes a twisted-nemativ (TN) mode liquid crystal panel and two polarizing plates disposed on the two sides of the panel. The directions of the axes of these elements have the following relationship.
(1) The directions of the axes of the two polarizing plates are orthogonal to each other.
(2) The direction of transmission of the front polarizing plate is perpendicular to the director of the liquid crystal molecules on the incident surface.

The above-described arrangement of the components of the liquid crystal device 301 is necessary for the following reasons.

In the optical apparatus explained above, the computer-generated hologram is recorded on the liquid crystal device using the two-dimensional amplitude distribution alone. However, in the TN mode liquid crystal device, there generally occurs not only an amplitude change but also a phase shift (Opt.Lett. 13, 251-253 (1988)). Hence, the directional relation between the liquid crystal panel and the polarizing plates, which assures the smallest possible phase shifts, must be obtained.

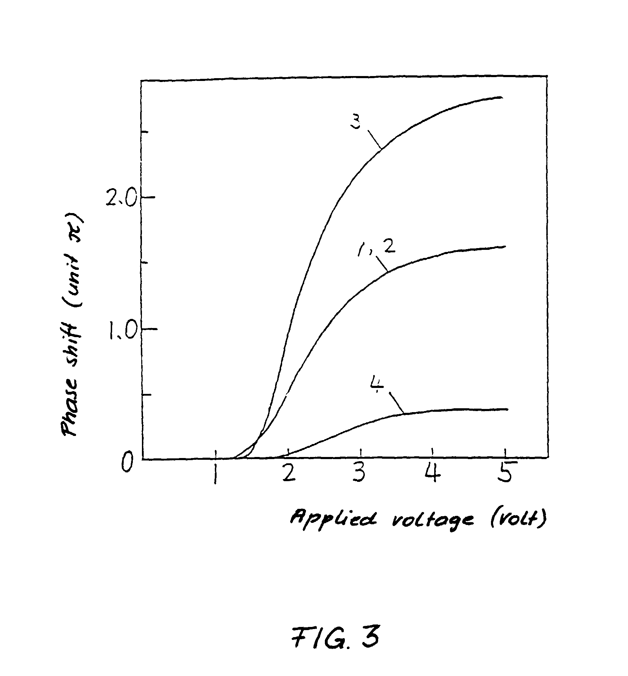

Fig. 3 is a graph showing the relationship between the phase shift and the voltage applied to the liquid crystal panel, obtained in the four fundamental conditions under which the TN mode liquid crystal panel is used. In Fig. 3, curve 1 denotes the case where the directions of the two polarizing plates are parallel to each other while the direction of the front polarizing plate is parallel to the director of the liquid crystal molecules on the incident surface, curve 2 denotes the case where the directions of the polarizing plates are parallel to each other while the front polarizing plate is orthogonal to the director of the liquid crystal molecules on the incident surface, curve 3 denotes the case where the directions of the two polarizing plates are orthogonal to each other while the direction of the front polarizing plate is parallel to the director, and curve 4 denotes the case where the directions of the polarizing plates are orthogonal to each other while the direction of the front polarizing plate is orthogonal to the director.

As is clear from Fig. 3, the phase shift is the smallest when the directions of the polarizing plates are orthogonal to each other while the direction of the front polarizing plate is orthogonal to the director.

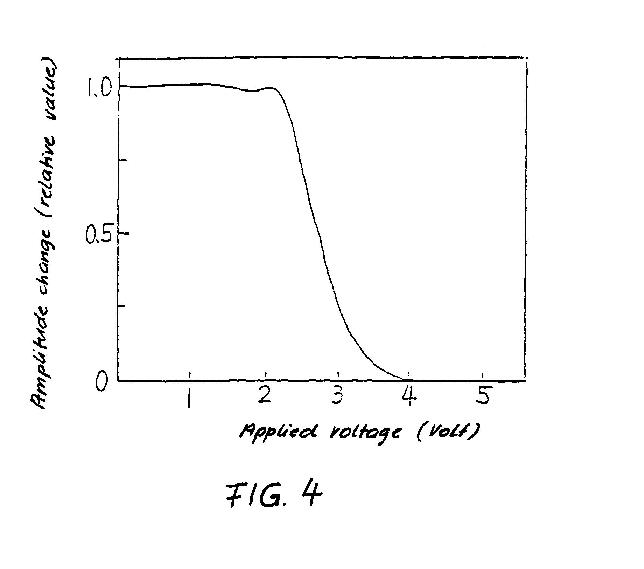

Fig. 4 is a graph showing the relationship between the applied voltage and the amplitude change, obtained when the liquid crystal panel and the polarizing plates are arranged in the above-described manner. As will be appreciated, it is possible to obtain a large contrast and a sufficient gradient.

In this way, a high-performance amplitude type computer-generated hologram can be recorded on the liquid crystal device.

### ECB mode liquid crystal device

An electrically controlled birefringence (ECB) mode liquid crystal device can be used in place of the TN mode liquid crystal device in the apparatus explained above.

This liquid crystal device includes an ECB mode liquid crystal panel, and a single polarizing plate disposed on the side of the panel on which a laser beam is incident. The liquid crystal molecules in the liquid crystal panel are oriented uniformly parallel to the panel substrate at the initial stage of the operation. The direction of transmission of the polarizing plate is parallel to the plane made by the panel substrate and the director of the liquid crystal molecules.

The above-described structure of the liquid crystal device enables changes in birefringence of the liquid crystal layer, caused by an applied voltage, to be effectively utilized. It is therefore possible to attain excellent phase modulation of the laser beam.

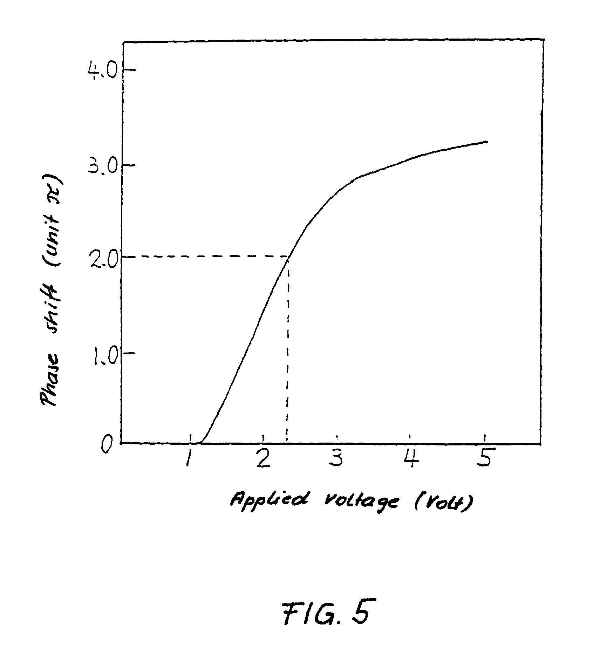

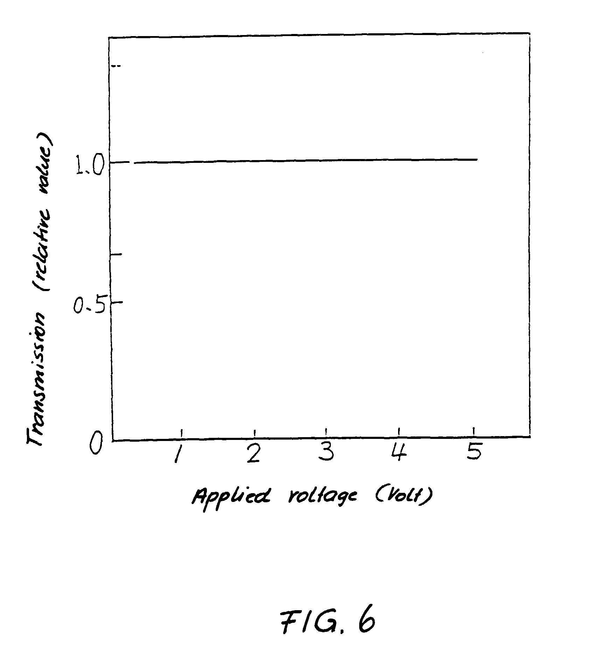

Fig. 5 shows the relationship between the phase shift and the applied voltage, obtained from the ECB mode liquid crystal device. Good linearity of the phase shift can be obtained in the applied voltage range from 1.2 volts to 2.5 volts. That relationship must be maintained on order to achieve phase control of the wavefront of the light by the unit of pixel and hence control of a laser beam. It is clear from Fig. 6 that a phase shift of 2 π, required for recording the phase type hologram, can be obtained when the amplitude of the video signal is 2.1 volts.

For the same liquid crystal device as in Fig. 5, Fig. 6 shows the relationship between the transmission and the voltage applied. In Fig. 6, another polarizing plate was disposed on the light emitting side of the liquid crystal device for measurements. The directions of transmission of the two polarizing plates were parallel to each other. It is apparent from Fig. 6 that the transmission, i.e., the square of the amplitude, is substantially constant regardless of the applied voltage. This relationship must be maintained in order to perform control of a laser beam which is free from disturbance caused by amplitude modulation of the laser beam.

It is possible to record a high-performance phase type computer-generated hologram on the liquid crystal device by utilizing the characteristics shown in Figs. 5 and 6.

The computer-generated hologram used in the optical apparatus of this embodiment is of the Fourier transform type in which pixels and Fourier transform values have a one-to-one correspondence.

In this way, the limited number of pixels can be effectively utilized when a computer-generated hologram is recorded on the ECB mode liquid crystal device.

### First Embodiment

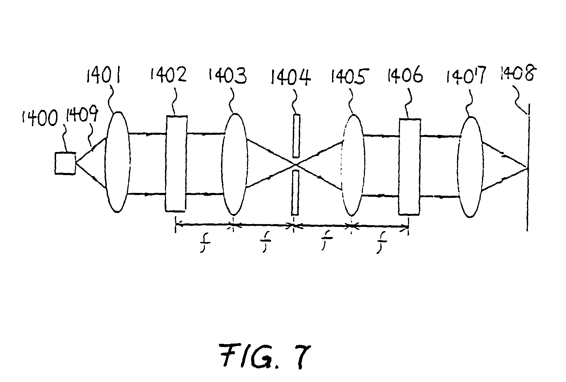

Fig. 7 shows the configuration of the liquid crystal device used in the optical apparatus according to an embodiment of the present invention. A semiconductor laser 1400 is used as a coherent light source. A laser beam 1409 emitted from the semiconductor laser 1400 is enlarged and converted into parallel rays of light by means of a collimator lens 1401 and then made incident on a TN mode liquid crystal device 1402 where the beam is subjected to two-dimensional amplitude modulation. The obtained two-dimensional image is led to an ECB mode liquid crystal device 1406 which is in optically conjugate relationship with the TN mode liquid crystal device 1402 by the action of an afocal system consisting of a lens 1403, a slit 1404 and a lens 1405 and subjected to two-dimensional phase modulation. The obtained two-dimensional image is output onto an output surface 1408 as a predetermined pattern by a Fourier transform lens 1407.

Both the liquid crystal devices 1402 and 1406 are of the TFT active matrix type, and respectively have the same external appearance, pixel arrangement and optical characteristics as those of the TN mode liquid crystal device and as those of the ECB mode liquid crystal device described above.

The cascade arrangement of the TN mode liquid crystal device 1402 for amplitude modulation and the ECB mode liquid crystal device 1406 for phase modulation enables simultaneous control of the amplitude and phase of the coherent light.

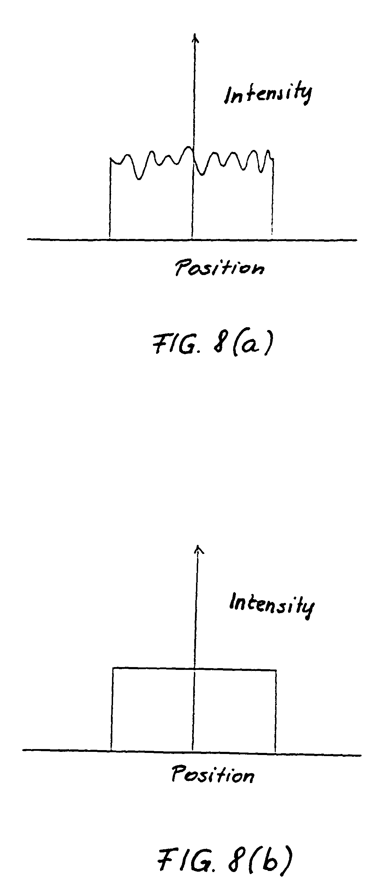

When amplitude modulation is conducted by the TN mode liquid crystal device 1402, phase a shift also occurs. In the TN mode liquid crystal device shown in Fig. 8, the directions of the axes of the two polarizing plates are orthogonal to each other, and the direction of the transmission of the front polarizing plate is orthogonal to the director of the liquid crystal molecules on the incident surface.

The above-described arrangement of the TN mode liquid crystal device enables phase shifts generated in the TN mode liquid crystal device 1402 to be suppressed. As a result, compensation for the phase shifts by means of the ECB mode liquid crystal device 1406 of the subsequent stage is facilitated.

To provide a cascade arrangement of the ECB mode liquid crystal device 1406 and the TN mode liquid crystal device 1402, the direction of the long axis of the liquid crystal molecules in the ECB mode liquid crystal device 1406 must be made parallel to the direction of the transmission of the rear polarizing plate in the TN mode liquid crystal device 1402.

In this way, compensation for the aforementioned phase shifts generated in the TN mode liquid crystal device and predetermined phase modulation of the laser beam 1409 can be achieved at the same time utilizing the phase modulation effect of the ECB mode liquid crystal device 1406.

Fig. 8(a) shows amplitude distribution of the kinoform (for example, IBM J.Res. Dev. 13 (1969)159) recorded using the amplitude/phase modulation type liquid crystal device of this embodiment. With the amplitude components of the information on an object (or an image) taken into consideration, reproduction of a sharp image having less quantization errors was possible. It was impossible to reproduce an excellent image from the kinoform recorded with the constant amplitude, as shown in Fig. 8(b).

### Second Embodiment

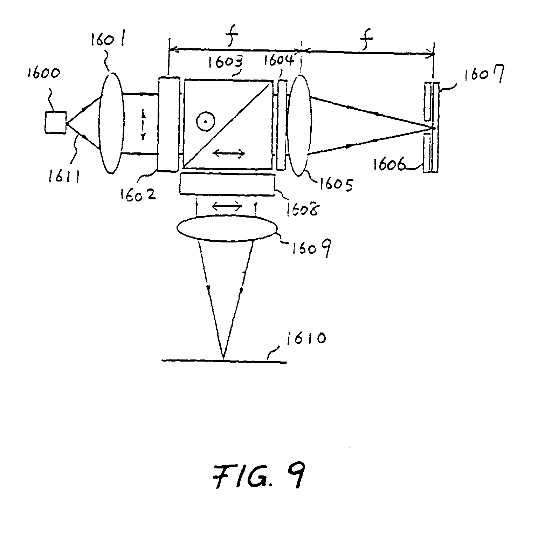

Fig. 9 shows the configuration of the liquid crystal device of the optical apparatus according to a second embodiment of the present invention.

A laser beam 1611 emitted from a semiconductor laser 1600 is converted into parallel rays of light by means of a collimator lens 1601 and then made incident on a TN mode liquid crystal device 1602. At that time, the beam 1611 is linearly polarized parallel to the surface of the paper. However, the beam 1611 is subjected to amplitude modulation and the output polarization angle is rotated by 90 degrees by the TN mode liquid crystal device 1602, and the beam 1611 is thereby made incident on a polarization beam splitter 1603 as light which is polarized perpendicularly to the surface of the paper. The beam 1611 is then converted into a circularly polarized light by the action of a quarter wave plate 1604, passes through a lens 1605 and a slit 1606, and then reaches a reflecting plate 1607. The beam 1611 turns its direction and is converted into a light which is linearly polarized parallel to the surface of the paper by the action of the quarter wave plate 1604, reflected by the polarization beam splitter and is made incident on an ECB mode liquid crystal device 1608 where it is subjected to phase modulation. Finally, the beam 1611 is output onto an output surface 1610 in a desired pattern by a Fourier transform lens 1609. In order to compensate for the phase shift generated in the TN mode liquid crystal device 1602 by means of the ECB mode liquid crystal device 1608, the direction of the transmission of the rear polarizing plate in the TN mode liquid crystal device 1602 is made orthogonal to the director of the liquid crystal molecules of the ECB mode liquid crystal device 1608.

In this embodiment, since the apparatus is constructed as a reflection type which uses the polarization beam splitter 1603, the overall size thereof can be reduced.

### Third Embodiment

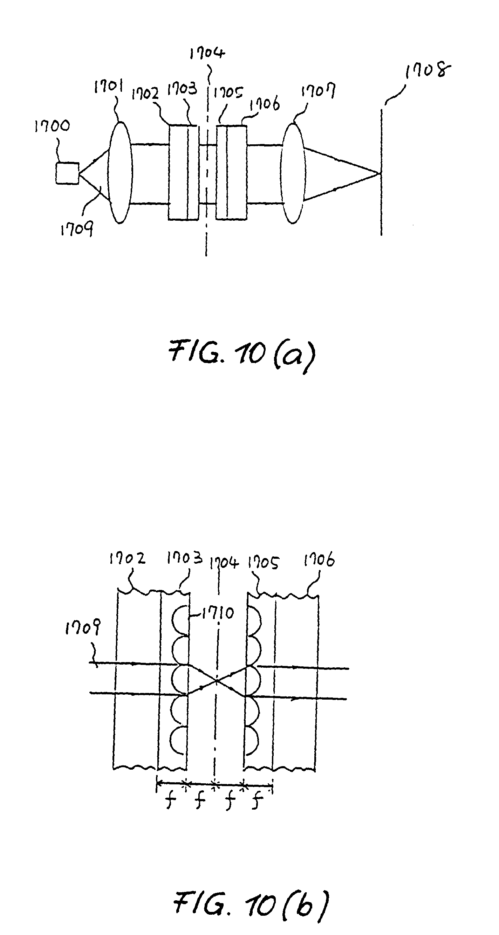

Fig. 10 shows the configuration of the optical apparatus according to a third embodiment of the present invention.

The configuration of this optical apparatus is partially the same as those of the apparatuses shown in Figs. 7 and 9, that is, the portion including a semiconductor laser 1700 for emitting a beam 1709, a collimator lens 1701, and a TN mode liquid crystal device 1702, and the portion including an ECB mode liquid crystal device 1706, a Fourier transform lens 1707 and an output surface 1708 are the same. The optical apparatus shown in Fig. 10(a) differs from those shown in Figs. 7 and 9 in that an afocal system, consisting of a pair of planar microlens arrays 1703 and 1705, is disposed between the two liquid crystal devices 1702 and 1706 to connect them. Fig. 10(b) shows in an enlarged fashion the portion of the optical apparatus including the afocal system. Two corresponding pixels of the two liquid crystal devices 1702 and 1706 are connected to each other by means of a pair of microlenses 1710. A Fourier transform surface 1704 is a focal point in image space for the planar microlens array 1703 of the preceding stage and an object focal point for the planar microlens array 1705 of the following stage. In order to compensate for the phase shifts generated in the TN mode liquid crystal device 1702, the direction of the transmission of the rear polarizing plate in the TN mode liquid crystal device 1702 is made parallel to the direction of the long axis of the liquid crystal molecules of the ECB mode liquid crystal device 1706.

In this embodiment, since the afocal system consisting of the pair of planar microlens arrays is used in the manner shown in Fig. 10, the overall size of the apparatus can further be reduced.

### Fourth Embodiment

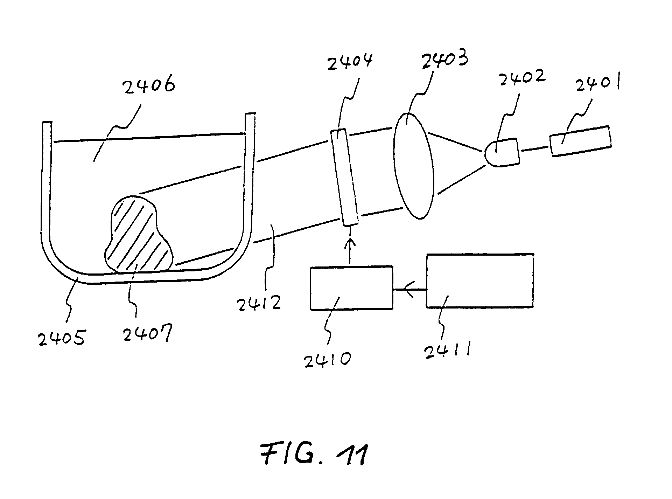

Fig. 11 shows the configuration of the optical apparatus of this embodiment.

A laser beam 2412 emitted from a laser light source 2401 is enlarged into parallel rays of light by means of a beam expander 2402 and a collimator lens 2403. Thereafter, the laser beam is phase modulated by the computer-generated hologram recorded on a liquid crystal device 2404 and the modulated laser beam reproduces the cross-sectional image of a desired body on the surface of a resin tank 2405. A resin 2406 at the surface of the resin tank which is not yet set sets by the irradiation of the laser beam. An unset resin layer is set in the form of a cross-section to form a solid model.

In this embodiment, the position at which the cross-sectional image is formed can be freely changed by changing the focal length of the lens for recording the phase type hologram. Parallel rays of light are modulated by the computer-generated hologram recorded on an amplitude/phase simultaneous modulation type liquid crystal device, and the modulated laser beam reproduces the cross-sectional image of a desired body in the resin tank. A solid model is obtained by reproducing the cross-sectional images while recording the phase type holograms having different focal lengths on the liquid crystal device in sequence. The amplitude/phase simultaneous modulation type liquid crystal device has any of the configurations shown in Fig. 7, 9 or 10. Since these configurations have respectively been described in the first, second and third embodiments, description thereof is omitted.

The use of this amplitude/phase simultaneous modulation type liquid crystal device permits a substantially complete wave front control. Therefore, a surface image of a solid body can be reproduced directly in the resin tank by recording on the amplitude/phase simultaneous modulation type liquid crystal device an optically transformed image of a surface configuration calculated by means of a computer and then by irradiating a laser beam onto such an amplitude/phase simultaneous modulation type liquid crystal device. In this embodiment, the surface of a solid is set starting from the portion thereof which is shaded by the object. Thereafter, the formed article is taken out of the resin tank, and the article is irradiated with strong light to set the interior thereof.

### Fifth Embodiment

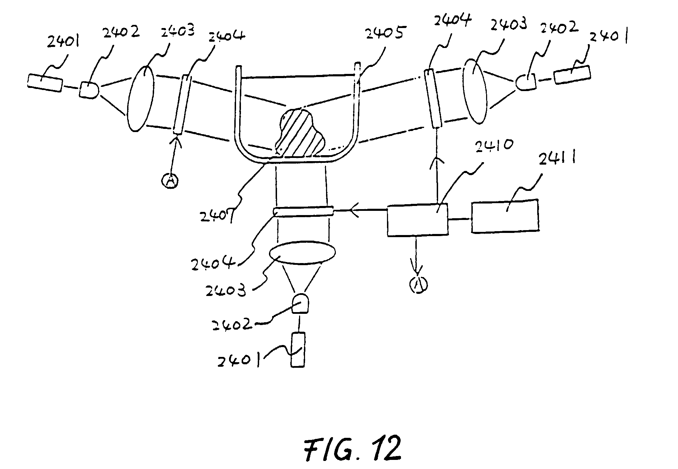

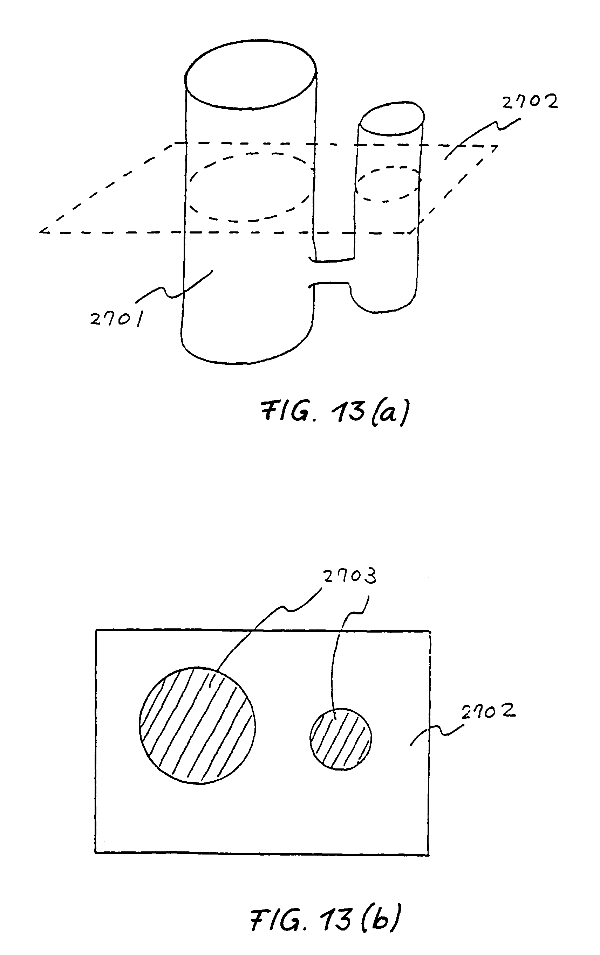

Fig. 12 shows the configuration of the optical apparatus of this embodiment. In this embodiment, a plurality of optical apparatuses used in the fourth embodiment are disposed around the resin tank in order to increase the forming speed and to enable formation of a complicated configuration. In this embodiment, setting of the surface 2701 of a solid having a non-connected cross-section 2703, such as that shown in Fig. 13, in one operation is possible. As a result, formation of a solid substantially on a real-time basis is made possible. Furthermore, a complicated configuration that cannot be set in one operation can be formed without delay by rewriting data on the liquid crystal device.

Since the optical system according to the present invention which employs the liquid crystal device is capable of generating a light spot at a given point in space, it can be applied to the conventional method in which scanning of a laser beam is conducted.

### Sixth Embodiment

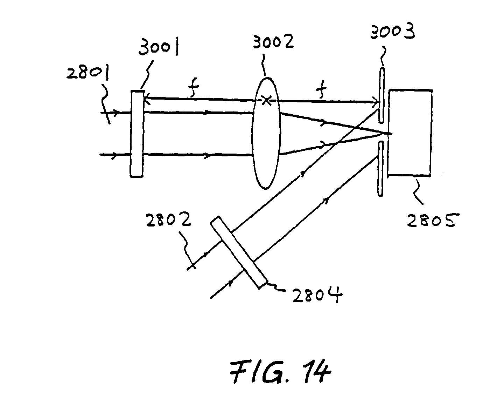

Fig. 14 shows the configuration of the optical apparatus of this embodiment. In this embodiment, an amplitude/phase simultaneous modulation type liquid crystal device 3001 is disposed in an object wave path 2801, and an ECB mode liquid crystal device 2804 is disposed in a reference wave path 2802. The image displayed by the amplitude/phase simultaneous modulation type liquid crystal device 3001 is Fourier transformed by a lens 3002. At that time, a random phase distribution is placed over an image to be recorded in the liquid crystal device 3001 so that the intensity of the Fourier transform image is substantially uniform in the hologram area. A spatial filter 3003 is adapted to remove diffraction image having a high order caused by the periodic pixel arrangement of the liquid crystal device 3001. The ECB mode liquid crystal device 2804 gives a predetermined phase distribution on the reference wave front and thereby performs encoding of the reference wave front by utilizing the phase modulation characteristics. A necessary image is recorded on an electro-optic crystal 2805 over the image recorded by the TN mode liquid crystal device using the reference wave front encoded for each pixel.

The liquid crystal device 2804 is of the TFT active-matrix drive type. The external appearance, pixel arrangement and optical characteristics of this liquid crystal device are the same as those of the the ECB mode liquid crystal device explained above. The amplitude/phase simultaneous modulation type liquid crystal device shown in Fig. 23 has the same configuration as that shown in Fig. 8, 10 or 11. Since those configurations have respectively been described in the first, second and third embodiments, description thereof is omitted.

In this embodiment, since the reference wave front is encoded using the liquid crystal device, the recording density of the hologram can be increased by two orders of magnitude. The use of various types of non-linear optical materials enables reproduction of data on a real-time basis.

The recording apparatus of this embodiment can be applied to a programmable optical interconnection, a large-capacity optical storage apparatus or a three-dimensional display apparatus.

Since a large number of dot-shaped holograms, on which a plurality of images are multiplexed, are disposed on the electro-optic crystal, as shown in Fig. 14, the recording density is greatly increased. This enables provision of a large-capacity optical storage apparatus.

According to the present invention, since desired light wave modulation characteristics are recorded on the liquid crystal device, a general-purpose optical apparatus having a programmable light wave front control function can be provided.

The optical apparatus according to the present invention can be extensively applied to an active optical control, such as a beam steering or an optical interconnection, information processing, instrumentation, a solid forming, and a three-dimensional image display.

## Claims

1. An optical apparatus for controlling a wave front of coherent light, comprising:
a first electrically controlled liquid crystal device (1406; 1608; 1706) for phase modulating said wave front, the liquid crystal device having a plurality of pixels;
a coherent light source (1400; 1600; 1700);
polarizing means disposed in front of said liquid crystal device;
means for illuminating said liquid crystal device by coherent light from said light source linearly polarized by said polarizing means wherein the direction of polarization of said light is parallel to the director of the liquid crystal molecules at the light incident side of the liquid crystal device; and
a signal generator for applying a complex phase modulation distribution to the first liquid crystal device;
characterized in that,
said first liquid crystal device includes an electrically controlled birefringence mode liquid crystal panel with the directors of the liquid crystal molecules being oriented parallel to each other and parallel to the liquid crystal panel when no signal is applied to the liquid crystal
wherein a second liquid crystal device (1402; 1602; 1702) is arranged between said light source (1400; 1600; 1700) and said first liquid crystal device (1406; 1608; 1706) for amplitude modulating said wave front, said second electrically controlled liquid crystal device (1402; 1602; 1702) including a twisted nematic mode liquid crystal panel and two polarizing plates respectively disposed in front and at the back of said liquid crystal panel; and
wherein said first liquid crystal device is adapted to compensate for any phase modulation caused by said second liquid crystal device.

2. The apparatus of claim 1 further comprising:
optical means (1403-1405) disposed between said first and second liquid crystal devices to provide a cascade arrangement of the first and second liquid crystal devices.

3. The apparatus according to claim 2, wherein said optical means comprises an afocal system consisting of at least two lenses (1403, 1405).

4. The apparatus according to claim 2, wherein said optical means comprises an afocal system consisting of a pair of planar microlens arrays (1703, 1705).

5. The apparatus according to either of claims 3 and 4, wherein the direction of polarization of the rear polarizing plate of said second liquid crystal device is in a plane defined by the director of liquid crystal molecules and the normal on the liquid crystal panel of said first liquid crystal device.

6. The apparatus of claim 1 further comprising:
a polarization beam splitter (1603), a quarter wave plate (1604), a lens (1605), a slit (1606) and a reflecting plate (1607) which components are disposed between said second and first liquid crystal devices.

7. The apparatus of claim 6 wherein the direction of the polarization of the rear polarizing plate of said second liquid crystal device (1602) is orthogonal to the director of the liquid crystal molecules of the first liquid crystal panel (1608).

8. The apparatus of any one of claims 1 to 7 wherein the directions of polarization of said two polarizing plates of the second liquid crystal device (2803) are orthogonal to each other, the direction of polarization of the front polarizing plate being orthogonal to the director of the liquid crystal molecules adjacent to the light incident surface of the twisted nematic mode liquid crystal panel.

9. Use of an apparatus (3001) according to any one of claims 1 to 8 for modulating an object wave (2801), together with a second electrically controlled birefringence mode liquid crystal panel (2804) for phase modulating a reference wave (2802), wherein
the directors of the liquid crystal molecules of the second electrically controlled birefringence mode liquid crystal panel (2804) are oriented parallel to each other and parallel to the liquid crystal panel when no signal is applied to the liquid crystal,
interference means (2805) are used for causing the reference wave phase modulated by said second electrically controlled birefringence mode liquid crystal panel (2804) and the object wave modulated by said apparatus (3001) to interfere with each other; and
the interference light from said interference means is recorded on an optical recording medium (2805).

## Patentansprüche

1. Optisches Gerät zum Steuern einer Wellenfront kohärenten Lichts, umfassend:
eine erste elektrisch gesteuerte Flüssigkristall-Vorrichtung (1406; 1608; 1706) zum Phasenmodulieren der Wellenfront, wobei die Flüssigkristall-Vorrichtung eine Mehrzahl von Pixeln aufweist;
eine kohärente Lichtquelle (1400; 1600; 1700);
eine vor der Flüssigkristall-Vorrichtung angeordnete Polarisationseinrichtung;
eine Einrichtung zum Beleuchten der Flüssigkristall-Vorrichtung mit kohärentem Licht aus der Lichtquelle, welches von der Polarisationseinrichtung linear polarisiert ist, wobei die Polarisationsrichtung des Lichts parallel zum Direktor der Flüssigkristallmoleküle an der Lichteinfallsseite der Flüssigkristall-Vorrichtung ist; und
einen Signalgenerator zum Anlegen einer komplexen Phasenmodulationsverteilung an die erste Flüssigkristall-Vorrichtung;
**dadurch gekennzeichnet**, daß
die erste Flüssigkristall-Vorrichtung eine elektrisch gesteuerte DoppelbrechungsmodusFlüssigkristalltafel aufweist, wobei die Direktoren der Flüssigkristallmoleküle parallel zueinander und parallel zur Flüssigkristalltafel orientiert sind, wenn kein Signal an den Flüssigkristall angelegt ist;
wobei eine zweite Flüssigkristall-Vorrichtung (1402; 1602; 1702) zwischen der Lichtquelle (1400; 1600; 1700) und der ersten Flüssigkristall-Vorrichtung (1406; 1608; 1706) zum Amplitudenmodulieren der Wellenfront angeordnet ist, wobei die zweite elektrisch gesteuerte Flüssigkristall-Vorrichtung (1402; 1602; 1702) eine Flüssigkristalltafel des verdrillt-nematischen Modus und zwei vor bzw. hinter der Flüssigkristalltafel angeordnete Polarisationsplatten aufweist; und
wobei die erste Flüssigkristall-Vorrichtung so ausgestaltet ist, daß sie jegliche von der zweiten Flüssigkristall-Vorrichtung verursachte Phasenmodulation kompensiert.

2. Gerät nach Anspruch 1, das des weiteren umfaßt:
eine optische Einrichtung (1403 - 1405), die zwischen der ersten und der zweiten Flüssigkristall-Vorrichtung angeordnet ist, um eine Kaskadenanordnung der ersten und der zweiten Flüssigkristall-Vorrichtung zu bilden.

3. Gerät nach Anspruch 2, bei dem die optische Einrichtung ein afokales System umfaßt, das aus mindestens zwei Linsen (1403, 1405) besteht.

4. Gerät nach Anspruch 2, bei dem die optische Einrichtung ein afokales System umfaßt, das aus einem Paar planarer Mikrolinsenfelder (1703, 1705) besteht.

5. Gerät nach Anspruch 3 oder 4, bei dem die Polarisationsrichtung der hinteren Polarisationsplatte der zweiten Flüssigkristall-Vorrichtung in einer Ebene liegt, die durch den Direktor der Flüssigkristallmoleküle und die Normale auf die Flüssigkristalltafel der ersten Flüssigkristall-Vorrichtung definiert ist.

6. Gerät nach Anspruch 1, das des weiteren umfaßt:
einen Polarisationsstrahlteiler (1603), ein Viertelwellenlängenplättchen (1604), eine Linse (1605), einen Spalt (1606) und eine Refelexionsplatte (1607), wobei diese Komponenten zwischen der zweiten und der ersten Flüssigkristall-Vorrichtung angeordnet sind.

7. Gerät nach Anspruch 6, bei dem die Polarisationsrichtung der hinteren Polarisationsplatte der zweiten Flüssigkristall-Vorrichtung (1602) senkrecht zum Direktor der Flüssigkristallmoleküle der ersten Flüssigkristalltafel (1608) ist.

8. Gerät nach einem der Ansprüche 1 bis 7, bei dem die Polarisationsrichtungen der zwei Polarisationsplatten der zweiten Flüssigkristall-Vorrichtung (2803) senkrecht zueinander sind, wobei die Polarisationsrichtung der vorderen Polarisationsplatte senkrecht zum Direktor der Flüssigkristallmoleküle in der Nähe der Lichteinfallsfläche der Flüssigkristalltafel des verdrillt-nematischen Modus ist.

9. Verwendung eines Geräts (3001) gemäß einem der Ansprüche 1 bis 8 zum Modulieren einer Objektwelle (2801) zusammen mit einer zweiten elektrisch gesteuerten Doppelbrechungsmodus-Flüssigkristalltafel (2804) zum Phasenmodulieren einer Referenzwelle (2802), wobei
die Direktoren der Flüssigkristallmoleküle der zweiten elektrisch gesteuerten Doppelbrechungsmodus-Flüssigkristalltafel (2804) parallel zueinander und parallel zur Flüssigkristalltafel orientiert sind, wenn kein Signal an den Flüssigkristall angelegt ist,
lnterferenzmittel (2805) verwendet werden, um zu bewirken, daß die von der zweiten elektrisch gesteuerten Doppelbrechungsmodus-Flüssigkristalltafel (2804) phasenmodulierte Referenzwelle und die von dem Gerät (3001) modulierte Objektwelle miteinander interferieren; und
das Interferenzlicht aus den Interferenzmitteln auf einem optischen Aufzeichnungsmedium (2805) aufgezeichnet wird.

## Revendications

1. Dispositif optique pour commander un front d'onde de lumière cohérente, comprenant :
un premier dispositif (1406 ; 1608 ; 1706) à cristaux liquides commandé électriquement et destiné à moduler la phase du front d'onde, le dispositif à cristaux liquides ayant une pluralité de pixels ;
une source de lumière cohérente (1400 ; 1600 ; 1700) ;
des moyens de polarisation disposés en avant du dispositif à cristaux liquides ;
des moyens pour illuminer le dispositif à cristaux liquides d'une lumière cohérente provenant de la source de lumière, polarisée linéairement par les moyens de polarisation, la direction de polarisation de la lumière étant parallèle au vecteur directeur des molécules de cristal liquide sur le côté "incident de lumière " du dispositif à cristaux liquides ; et
un générateur de signaux pour appliquer une distribution complexe de modulation de phase au premier dispositif à cristaux liquides ;
caractérisé en ce que
le premier dispositif à cristaux liquides comprend un panneau de cristaux liquides en mode biréfringence, commandé électriquement, les vecteurs directeurs des molécules de cristal liquide étant orientées parallèlement les unes aux autres, et parallèlement au panneau de cristaux liquides quand aucun signal n'est appliqué au cristal liquide,
un deuxième dispositif (1402 ; 1602 ; 1702) à cristaux liquides étant disposé entre la source de lumière (1400 ; 1600 ; 1700) et le premier dispositif (1406 ; 1608 ; 1706) à cristaux liquides pour moduler en amplitude le front d'onde, le deuxième dispositif (1402 ; 1602 ; 1702) à cristaux liquides commandé électriquement comprenant un panneau de cristaux liquides en mode nématique torsadé et deux plaques de polarisation, disposés respectivement à l'avant et à l'arrière du panneau de cristaux liquides ; et
le premier dispositif à cristaux liquides est adapté de façon à compenser toute modulation de phase provoquée par le deuxième dispositif à cristaux liquides.

2. Dispositif selon la revendication 1, comprenant en outre :
des moyens (1403-1405) optiques disposés entre le premier et le deuxième dispositifs à cristaux liquides. pour créer un agencement en cascade du premier et du deuxième dispositifs à cristaux liquides.

3. Dispositif selon la revendication 2. dans lequel les moyens optiques comprennent un système afocal constitué d'au moins deux lentilles (1403, 1405).

4. Dispositif selon la revendication 2. dans lequel les moyens optiques comprennent un système afocal constitué d'une paire de matrices (1703, 1705) de microlentilles planes.

5. Dispositif selon l'une ou l'autre des revendications 3 et 4, dans lequel la direction de polarisation de la plaque polarisante arrière du deuxième dispositif à cristaux liquides est dans un plan défini par le vecteur directeur des molécules de cristal liquide et la normale au panneau de cristaux liquides du premier dispositif à cristaux liquides.

6. Dispositif selon la revendication 1, comprenant en outre
un diviseur (1603) de faisceau à polarisation, une plaque quart d'onde (1604), une lentille (1605), une fente (1606) et une plaque réfléchissante (1607), ces composants étant disposés entre le deuxième et le premier dispositifs à cristaux liquides.

7. Dispositif selon la revendication 6, dans lequel la direction de la polarisation de la plaque polarisante arrière du deuxième dispositif (1602) à cristaux liquides est orthogonale au vecteur directeur des molécules de cristaux liquides du premier panneau (1608) de cristaux liquides.

8. Dispositif selon l'une quelconque des revendications 1 à 7, dans lequel les directions de polarisation des deux plaques polarisantes du deuxième dispositif (2803) à cristaux liquides sont orthogonales l'une à l'autre, la direction de polarisation de la plaque polarisante avant étant orthogonale au vecteur directeur des molécules de cristaux liquides adjacentes à la surface d'incidence de la lumière du panneau de cristaux liquides en mode nématique torsadé.

9. Utilisation d'un dispositif (3001) selon l'une quelconque des revendications 1 à 8 pour moduler une onde objet (2801), en combinaison avec un deuxième panneau (2084) de cristaux liquides en mode biréfringence commandé électriquement, pour moduler en phase une onde de référence (2802), dans lequel
les vecteurs directeurs des molécules de cristaux liquides du deuxième panneau de cristaux liquides (2804) en mode biréfringence commandé électriquement sont orientées parallèlement les uns aux autres et sont parallèles au panneau de cristaux liquides quand aucun signal n'est appliqué au cristal liquide,
des moyens d'interférence (2805) sont utilisés pour provoquer l'interférence l'une avec l'autre de l'onde de référence, ayant subi une modulation de phase sous l'effet du deuxième panneau de cristaux liquides (2804) en mode biréfringence commandé électriquement et l'onde objet, modulée par le dispositif (3001) ; et
la lumière d'interférence provenant des moyens d'interférence est enregistrée sur un support d'enregistrement optique (2805).
